# EUROPEAN PATENT APPLICATION

(11) **EP 2 760 139 A1**
(43) Date of publication of application: **30.07.2014**
(21) Application number: 12833270.7
(22) Date of filing: 09.03.2012
(51) Int. Cl.: H04B 1/38, A45C 11/00

(54) **DOUBLE-TYPE CASE COUPLING A CHARACTER CASE HAVING A CLICKING ROTATION FUNCTION WITH A SMARTPHONE CASE**

(30) Priority: 22.09.2011 KR 20110095761
(71) Applicant: Jang, Daegyu, Gyeonggi-do 445-926 (KR)
(72) Inventor: Jang, Daegyu, Gyeonggi-do 445-926 (KR)
(74) Representative: Chaillot, Geneviève
(86) International application number: PCT/KR2012/001747
(87) International publication number: WO 2013/042849

(57) **Abstract**

The present invention relates to a double-type case coupling a character case having a clicking rotation function with a smartphone case, wherein a smartphone can be held by rotating a character case having a clicking rotation function by means of a component that can rotate on the smartphone case, and the exterior of the smartphone can be aesthetically formed.

## Description

### [Technical Field]

The present invention relates to a double-type case coupling a character case having a clicking rotation function with a smartphone case, wherein a smartphone can be held by rotating a character case having a clicking rotation function by means of a component that can rotate on the smartphone case, and the exterior of the smartphone can be aesthetically formed.

### [Background Art]

In general, since smartphones have different shapes that vary according to types of equipment, shapes of smartphone cases also vary. Smartphone cases are used to decorate smartphones in an aesthetically pleasing fashion, to prevent liquid crystal of smartphones or the outer side of equipment from being damaged from a scratch or damage due to external shock, and to improve a sense of grip when smartphones are carried and used.

A smartphone case according to the related art is coupled to an outer side of smartphone terminal equipment, feels soft to a user, gives a frictional force so that the surface of the smartphone case is not slippery and is formed of a silicone or urethane material having elasticity so that the smartphone case can be softly attached to or detached from the smartphone terminal equipment. The smartphone case that is a case that surrounds sides or both sides and a rear surface of the smartphone terminal equipment is generally configured of only a protective case having a rear surface printed with various patterns, such as a character, a logo, a picture, and a design, or a three-dimensional case having various shapes including an animal or object.

However, even if the smartphone case according to the related art has the rear surface printed with various patterns, the smartphone case expresses only one visible shape, is fixed to the smartphone terminal equipment and has no configuration of a unit that serves as an additional holder or a rotating unit. Thus, when a generally well-used moving picture or a screen, such as digital multimedia broadcasting (DMB), is continuously viewed, the smartphone case cannot be held and should be gripped with a hand, or a holder should be separately purchased and carried.

### [Disclosure]

### [Technical Problem]

The present invention is directed to providing a double-type case coupling a character case having a clicking rotation function with a smartphone case, wherein the character case can be attached to and detached from a rear surface of the smartphone case and can be rotated by adjusting an angle in a range of 1° to 360° with respect to the smartphone case so that the character case serves as a holder on the bottom, various characters, such as an animal, a plant, and a person, can be formed so that the exterior design of the smartphone case can be simply installed according to personal taste and the character case is formed of a non-toxic, durable, and elastic material and is configured to represent a clicking sound so that the character case can be used as a toy for a child or infant.

### [Technical Solution]

One aspect of the present invention provides a double-type case coupling a character case having a clicking rotation function with a smartphone case, the double-type case including: a smartphone case (100) that protects and supports a smartphone and supports the smartphone in such a way that that a character case can be coupled with the smartphone case (100) while being attached to and detached from an outer surface of the smartphone case (100); and a character case (200) that is coupled with the smartphone case (100) while being attached to and detached from a central one side of the outer surface of the smartphone case (100) and that rotates a character around the smartphone case according to a user's settings.

### [Effect of the Invention]

As described above, according to the present invention, a character case can be rotated by adjusting an angle in a range of 1° to 360° with respect to a smartphone case so that the character case serves as a holder on the bottom, various characters such as an animal, a plant, and a person can be formed in a unique design to appeal to female customers, and the character case is formed of a non-toxic, durable, and elastic material and is configured to represent a clicking sound so that the character case can be used as a toy for a child or infant.

### [Description of Drawings]

FIG. 1 is a perspective view illustrating whole elements of a double-type case 1 coupling a character case having a clicking rotation function with a smartphone case according to an embodiment of the present invention.
FIG. 2 is a front cross-sectional view illustrating a procedure in which a smartphone case 100 and a character case 200 are coupled with each other according to an embodiment of the present invention.
FIG. 3 is a front cross-sectional view illustrating a state in which the smartphone case 100 and the character case 200 are coupled with each other according to an embodiment of the present invention.
FIG. 4 is a perspective view illustrating elements such as a clicking fixing cap 120 and an attachment/detachment rotation cap 220 according to an embodiment of the present invention.
FIG. 5 is an internal cross-sectional view illustrating an internal state in which the clicking fixing cap 120 and the attachment/detachment rotation cap 220 are coupled with each other according to an embodiment of the present invention.
FIG. 6 illustrates a state in which a character case having a plastic molding character and a smartphone case are coupled with each other using the clicking fixing cap 120 and the attachment/detachment rotation cap 220 according to an embodiment of the present invention.
FIG. 7 illustrates a state in which a character case having a plastic molding character and a smartphone case are coupled with each other in a slide manner according to an embodiment of the present invention.
FIG. 8 illustrates a state in which a character case having a rag doll character and a smartphone case are coupled with each other using a Velcro tape according to an embodiment of the present invention.
FIG. 9 illustrates a state in which a character case having a rag doll character and a smartphone case are coupled with each other using the clicking fixing cap 120 and the attachment/detachment rotation cap 220 according to an embodiment of the present invention.

### [Modes of the Invention]

First, a character case to be described in the present invention is formed by introducing a figure of a unique person or animal that appears in a novel, an animation, or a drama into a design. The character case has an attachment/detachment rotation cap formed therein and is attached to or detached from a smartphone case.

The character case includes a plastic molding character manufactured in the shape of an animal, a plant, or a person and a doll character manufactured in the shape of a rag doll.

Hereinafter, exemplary embodiments of the present invention will be described with reference to the drawings.

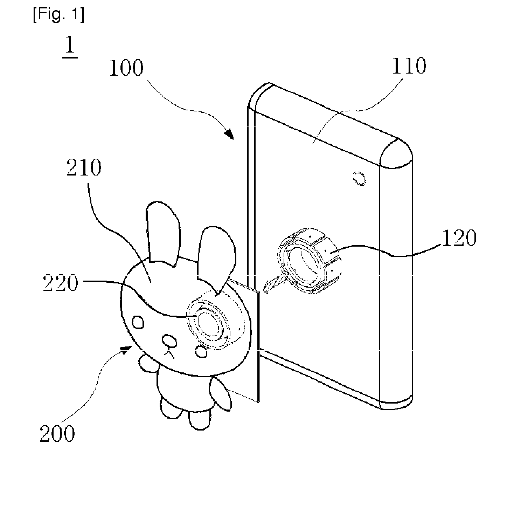

FIG. 1 is a perspective view illustrating whole elements of a double-type case 1 coupling a character case having a clicking rotation function with a smartphone case according to an embodiment of the present invention. The double-type case 1 includes a smartphone case 100 and a character case 200.

First, the smartphone case 100 according to the present invention will be described.

The smartphone case 100 protects and supports a smartphone and supports the smartphone in such a way that the character case 200 can be coupled with the smartphone while being attached to and detached from an outer surface of the smartphone case 100.

The smartphone case 100 includes a case body 110 and a clicking fixing cap 120.

The case body 110 is configured in the shape of a rectangular cover so that the case body 110 can be coupled with the character case 200 while including a rear surface and whole side edges of the smartphone. Thus, the case body 110 prevents damage of the smartphone when foreign substances are introduced onto a rear surface of the smartphone or an external pressure is applied to the rear surface of the smartphone.

The case body 110 is formed of a silicone or urethane material, or a plastic material, has the same size as the exterior of the smartphone so that the smartphone can be inserted into an internal space of the case body 110, and protects the exterior of the smartphone from scratching or other damage. The case body 110 is formed to a thickness of 0.7 to 3 mm so as to improve a sense of grip and to reduce volume when a user carries the case body 110 or grasps the case body 110 with his/her hand.

The clicking fixing cap 120 is formed in the center of an outer surface of the case body 110 and supports the character case 200 to be coupled with the smartphone case 100 while being attached to and detached from the outer surface of the smartphone case 100, and to be rotated at an angle in the range of 1° to 360° together with a clicking sound.

The clicking fixing cap 120 is classified as an integrated type in which the clicking fixing cap 120 is injection molded as an integrated type with the case body 110 or an independent type in which the clicking fixing cap 120 is separately manufactured and is coupled with the case body 110 using an ultrasonic welding device.

In the present invention, a clicking fixing cap configured of an integrated type will be described below.

The clicking fixing cap includes a first cap support portion 121 and a second cap support portion 122.

The first cap support portion 121 protrudes in a circular shape, and engraved grooves are formed in the first cap support portion 121 at 45° intervals with respect to a starting point along a circumference, and the first cap support portion 121 causes a hook dot of a first cap insertion portion of an attachment/detachment rotation cap to be caught in the engraved grooves, and guides the character case 200 to be rotated at 20° to 40° intervals together with a clicking sound.

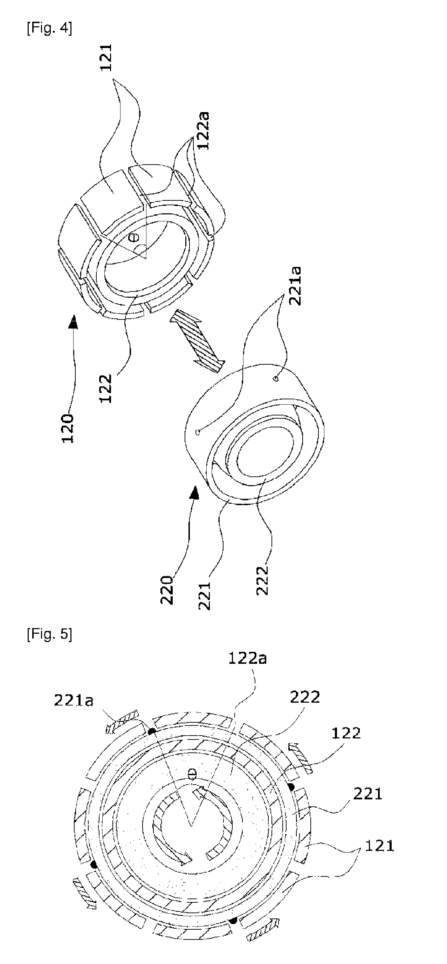

As illustrated in FIGS. 4 and 5, the first cap support portion 121 includes a cap support body that protrudes in a circular shape and engraved grooves formed in the first cap support portion 121 at 45° intervals with respect to a starting point along a circumference of the cap support body.

Here, 8 engraved grooves are formed, and thus the cap support body is divided into 8 portions.

The first cap support portion 121 has the engraved grooves at the 45° intervals, causes the hook dot of the first cap insertion portion to be caught in the engraved grooves while being rotated and to produce a clicking sound. Simultaneously, the first cap support portion 121 may guide the character case 200 to be rotated at 20° to 40° (θ) intervals.

Here, the character case 200 is formed at the 20° to 40° intervals because, at an angle below 20°, a large number of engraved grooves need to be formed, which causes a rise in manufacturing cost, and at an angle above 40°, the character case 200 cannot be placed in a horizontal or vertical direction according to the user's desired rotation angle and thus the character case 200 cannot serve as a holder. Thus, most preferably, the character case 200 may be formed at the 20° to 40° intervals.

The second cap support portion 122 is placed inside the first cap support portion 121, a "┐ "-shaped protrusion 122a is formed on a front end of the second cap support portion 122, and the second cap support portion 122 supports a top end of a second cap insertion portion of the attachment/detachment rotation cap so that the second cap insertion portion of the attachment/detachment rotation cap can be caught in the protrusion 122a and rotates the character case 200 according to a rotational force and a rotation angle transmitted from the first cap support portion 121.

Next, the character case 200 according to the present invention will be described.

The character case 200 is coupled with the smartphone case 100 while being attached to and detached from a central one side of the outer surface of the smartphone case 100. The character case 200 rotates a character around the smartphone case 100 according to the user's settings.

The character case 200 includes a character body 210 and an attachment/detachment rotation cap 220.

The character body 210 is formed of a plastic injection-molded character molded in the shape of an animal, a plant, and a person and is installed at a rear surface of the smartphone case 100 in an attachment/detachment manner.

The attachment/detachment rotation cap 220 is formed at one side of an inner surface of the character.

The character body 210 according to the present invention is manufactured by extrusion-molding a non-toxic material having excellent durability and a good feel, i.e., by extrusion-molding a mixture of 20-70 wt% of thermoplastic polyurethane, 10-50 wt% of thermoplastics elastomer, 10-45 wt% of thermoplastics polystyrene, and 10-45 wt% of thermoplastics polyolefin.

In more detail, a resin mixture of 30 wt% of thermoplastic polyurethane, 20 wt% of thermoplastics elastomer, 15 wt% of thermoplastics polystyrene, and 35 wt% of thermoplastics polypropylene is extrusion-molded with a length/diameter ratio (L/D) of 28-32:1 of a screw of an extrusion-molding device and with a compression ratio in the range of 2.5-3.0.

Thermoplastic polyurethane has excellent mechanical strength, excellent abrasion resistance, and excellent properties in flexibility resistance, coloring, and touch. When the usage amount of thermoplastic polyurethane is less than 20 wt%, its durability is lowered, and a product may be damaged, and when the usage amount of thermoplastic polyurethane exceeds 70 wt%, its formability may be lowered. Thus, the usage amount of thermoplastic polyurethane may be limited to the range of 20-70 wt% based on the total weight of the mixture.

Thermoplastics elastomer is used to improve formability. When the usage amount of thermoplastics elastomer is less than 10 wt%, its formability is lowered, and when the usage amount of thermoplastics elastomer exceeds 45 wt%, its durability may be lowered. Thus, the usage amount of thermoplastics elastomer may be limited to the range of 10-45 wt% based on the total weight of the mixture.

When the usage amount of thermoplastics polystyrene is less than 10 wt%, usage amounts of other ingredients increase relatively, which causes an increase in cost and is uneconomical. When the usage amount of thermoplastics polystyrene exceeds 45 wt%, characteristics of goods, such as durability and the like, are rapidly lowered. Thus, the usage amount of thermoplastics polystyrene may be limited to the range of 10-45 wt%, based on the total weight of the mixture.

Thermoplastics polyolefin is the lightest plastic having a low frictional coefficient, has excellent durability, heat resistance, and chemical property resistance, and is non-toxic and transparent. At least one selected from the group consisting of high-density polyethylene (HDPE), ultra high-density polyethylene (UHDPE), low-density polyethylene (LDPE), ultra low-density polyethylene (ULDPE), linear low-density polyethylene (LLDPE), polypropylene, and ethylene vinyl acetate (EVA) resin is used as thermoplastics polyolefin.

When the usage amount of thermoplastics polyolefin is less than 10 wt%, durability of a product is lowered, and when the usage amount of thermoplastics polyolefin exceeds 45 wt%, formability of the product may be lowered. Thus, the usage amount of thermoplastics polyolefin may be limited to the range of 10-45 wt% based on the total weight of the mixture.

Also, the character body 210 according to the present invention includes a doll character manufactured in the shape of a rag doll in addition to the plastic molding character manufactured in the shape of an animal, a plant, or a person by injection molding. The character body 210 is installed at the rear surface of the smartphone case 100 in an attachment/detachment manner.

Here, the doll character manufactured in the shape of the rag doll is made by sewing the shape of the animal, the plant, or the person, and an attachment/detachment rotation cap is formed in the doll character.

The attachment/detachment rotation cap 220 is formed in the center of the outer surface of the character body 210 as an integrated type, is coupled with the smartphone case 100 in an attachment/detachment manner and is rotated around the smartphone case 100 at an angle in the range of 1° to 360° together with a clicking sound.

The attachment/detachment rotation cap 220 includes a first cap insertion portion 221 and a second cap insertion portion 222.

The first cap insertion portion 221 protrudes in a circular shape so as to be inserted into a support space of the first cap support portion 121, and a hook dot 221a is formed in the first cap insertion portion 221 in four directions at 90° intervals with respect to a starting point along a circumference, is caught in the engraved grooves of the first cap support portion 121 and is rotated at an angle of 20° to 40° together with a clicking sound.

Here, the hook dot 221a is formed as a ball type and serves as a hanging jaw to be caught in the engraved grooves.

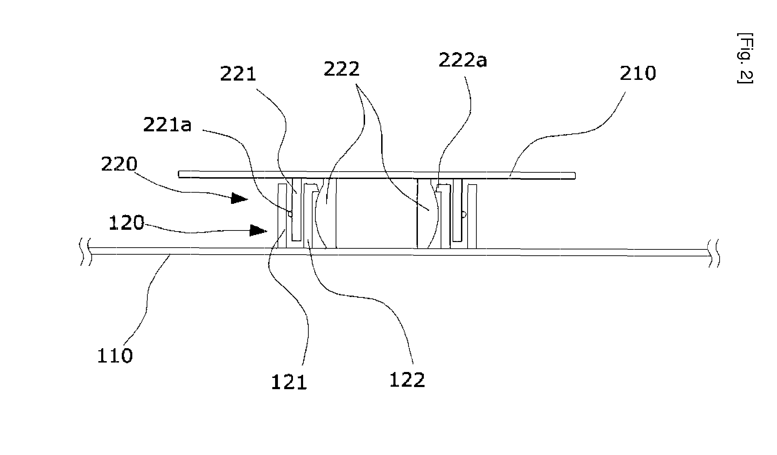

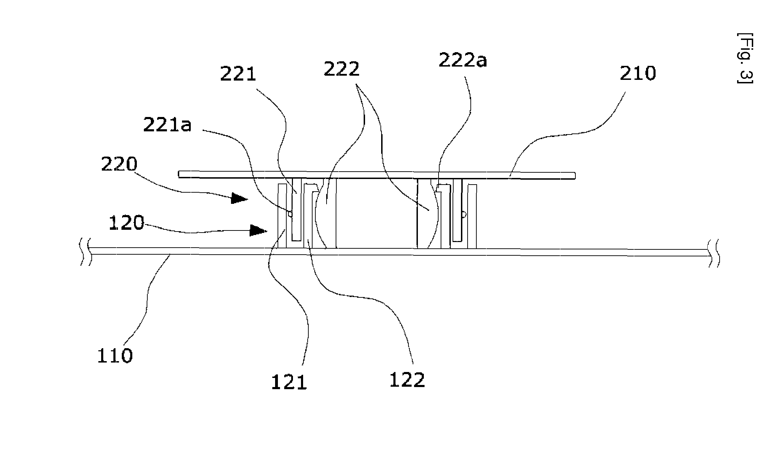

The second cap insertion portion 222 is placed inside the first cap support portion 121, and a portion 222a of the second cap insertion portion 222 that contacts the second cap support portion 122 protrudes convexly, is elastically coupled with the "┐ "-shaped protrusion 122a of the second cap support portion 122 and is rotated according to a rotational force and a rotation angle transmitted from the first cap insertion portion 221, as illustrated in FIGS. 2 and 3.

Hereinafter, detailed operations of the double-type case coupling the character case having the clicking rotation function with the smartphone according to the present invention will be described.

First, the smartphone case 100 is coupled with a rear surface of a smartphone.

Subsequently, the attachment/detachment rotation cap 220 of the character case 200 is coupled with the clicking fixing cap 120 while being attached to and detached from the clicking fixing cap 120 formed in a central one side of the outer surface of the smartphone case 100.

Subsequently, the character case 200 is rotated around the smartphone case 100 at an angle in the range of 1° to 360°.

In this case, the character case 200 can be placed at a user's desired rotation angle together with a clicking sound and can be used as a holder.

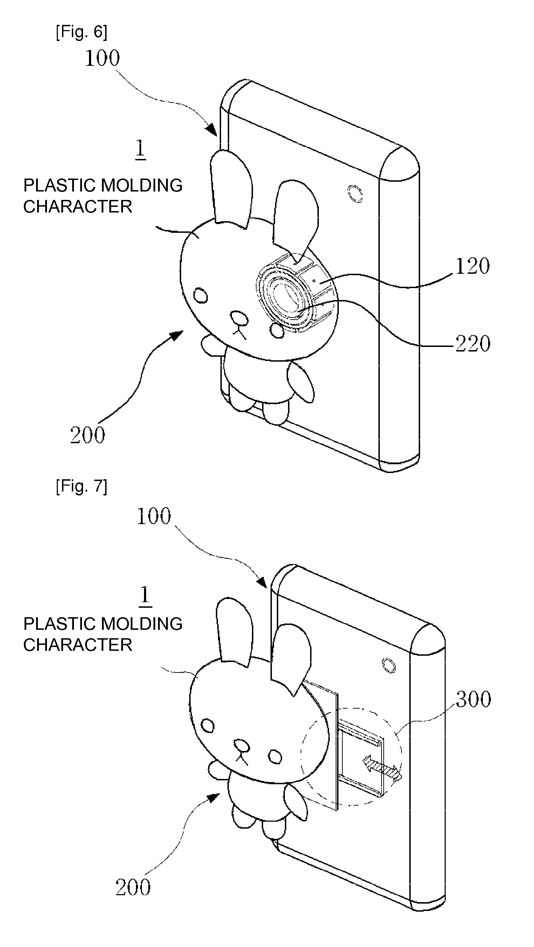

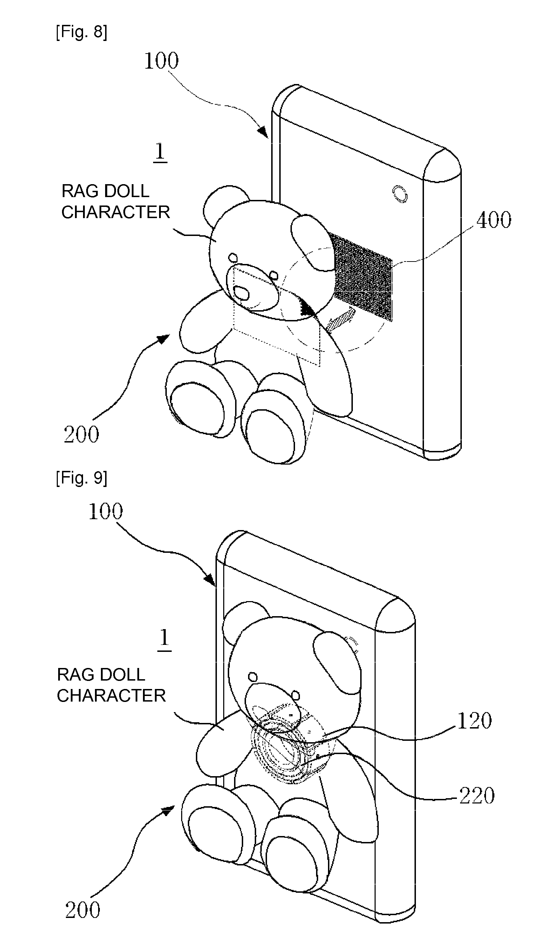

Also, FIG. 7 illustrates the character case having a plastic molding character according to the present invention and the smartphone case coupled with each other in a slide manner, FIG. 8 illustrates the character case having a rag doll character according to the present invention and the smartphone case coupled with each other using a Velcro tape, and FIG. 9 illustrates the character case having a rag doll character and the smartphone case coupled with each other using the clicking fixing cap 120 and the attachment/detachment rotation cap 220.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A double-type case coupling a character case having a clicking rotation function with a smartphone case, the double-type case comprising:
a smartphone case (100) that protects and supports a smartphone and supports the smartphone in such a way that a character case can be coupled with the smartphone case (100) while being attached to and detached from an outer surface of the smartphone case (100); and
a character case (200) that is coupled with the smartphone case (100) while being attached to and detached from a central one side of the outer surface of the smartphone case (100) and that rotates a character around the smartphone case according to a user's settings.

2. The double-type case of claim 1, wherein the smartphone case (100) comprises:
a case body (110) that is configured in the shape of a rectangular cover so that the case body (110) is capable of being coupled with the character case (200) while including a rear surface and whole side edges of the smartphone; and
a clicking fixing cap (120) that is formed in a center of an outer surface of the case body (110) and supports the character case (200) to be coupled with the smartphone case (100) while being attached to and detached from the outer surface of the smartphone case (100), and to be rotated at an angle in the range of 1° to 360° together with a clicking sound.

3. The double-type case of claim 2, wherein the clicking fixing cap (120) comprises:
a first cap support portion (121) that protrudes in a circular shape and has engraved grooves formed in the first cap support portion (121) at 45° intervals with respect to a starting point along a circumference, that causes a hook dot of a first cap insertion portion of an attachment/detachment rotation cap to be caught in the engraved grooves, and that guides the character case (200) to be rotated 20° to 40° intervals together with a clicking sound; and
a second cap support portion (122) that is placed inside the first cap support portion (121) and has a "┐"-shaped protrusion formed on a front end of the second cap support portion (122), that supports a top end of a second cap insertion portion of the attachment/detachment rotation cap so that the second cap insertion portion of the attachment/detachment rotation cap can be caught in the protrusion and rotates the character case (200) according to a rotational force and a rotation angle transmitted from the first cap support portion (121).

4. The double-type case of claim 1, wherein the character case (200) comprises:
a character body (210) that is formed of a plastic molding character injection-molded in the shape of an animal, a plant, and a person and that is installed at a rear surface of the smartphone case (100) in an attachment/detachment manner; and
an attachment/detachment rotation cap (220) that is formed in the center of the outer surface of the character body (210) as an integrated type, that is coupled with the smartphone case (100) in an attachment/detachment manner and that is rotated around the smartphone case (100) at an angle in the range of 1° to 360° together with a clicking sound.

5. The double-type case of claim 4, wherein the attachment/detachment rotation cap (220) comprises:
a first cap insertion portion (221) that protrudes in a circular shape so as to be inserted into a support space of the first cap support portion (121), that has a hook dot (221a) formed in the first cap insertion portion (221) in four directions at 90° intervals with respect to a starting point along a circumference, is caught in the engraved grooves of the first cap support portion (121) and is rotated at an angle of 20° to 40° together with a clicking sound; and
a second cap insertion portion (222) that is placed inside the first cap support portion (121), that has a portion (222a) of the second cap insertion portion (222) that contacts the second cap support portion (122), protruding convexly, that is elastically coupled with the "┐ "-shaped protrusion of the second cap support portion (122) and that is rotated according to a rotational force and a rotation angle transmitted from the first cap insertion portion (221).

6. The double-type case of claim 1, wherein the character body (210) is manufactured by extrusion-molding a mixture of 20-70 wt% of thermoplastic polyurethane, 10-50 wt% of thermoplastics elastomer, 10-45 wt% of thermoplastics polystyrene, and 10-45 wt% of thermoplastics polyolefin with 28-32:1 of a length/diameter ratio (LD) of a screw of an extrusion molding device and with a compression ratio in the range of 2.5-3.0.
